(19) **Europäisches Patentamt European Patent Office Office européen des brevets**

(11) **EP 4 682 589 A1**

(12) **EUROPEAN PATENT APPLICATION**

(43) Date of publication:
**21.01.2026 Bulletin 2026/04**

(21) Application number: **25189055.4**

(22) Date of filing: **11.07.2025**

(51) International Patent Classification (IPC):
*G01S 19/44* $^{(2010.01)}$

(52) Cooperative Patent Classification (CPC):
**G01S 19/44**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **17.07.2024 US 202418775791**

(71) Applicant: **Veripos Limited**
**Aberdeen AB21 7DT (GB)**

(72) Inventors:
- **MERVART, Leos**
  **170 00 Praha 7 (CZ)**
- **LUKES, Zdenek**
  **130 00 Praha 3 (CZ)**

(74) Representative: **Kaminski Harmann**
**Patentanwälte AG**
**Landstrasse 124**
**9490 Vaduz (LI)**

(54) **SYSTEMS, METHODS, AND MEDIA FOR RESOLVING FLOATING-POINT AMBIGUITIES TO THEIR CORRECT INTEGER VALUES FOR USE WITH A POSITIONING TECHNIQUE**

(57) Techniques are provided for resolving floating-point ambiguities (e.g., DD ambiguity values) to their correct integer for use with a positioning technique. In an embodiment, a variance value may be calculated for each of the plurality of DD ambiguity values which are results of the BIE algorithm. The variance values may be utilized to create a sorted list of the DD ambiguity values, where a lower variance value may be indicative of a more reliable DD ambiguity value. Each DD ambiguity value in the sorted list may be evaluated such that more reliable DD ambiguity values are evaluated first. An optimal set may be created that includes DD ambiguity values selected from the sorted list. Each selected DD ambiguity value may have a fractional part that is less than a threshold value and the optimal set may be independent with the selected DD ambiguity values.

FIG. 1

**Description**

*Technical Field*

The invention relates generally to positioning techniques, and in particular, to systems, methods, and media for resolving floating-point ambiguities to their correct integer values for use with a positioning technique.

*Background Information*

Precise point positioning (PPP) has found increased applications due to its cost-effectiveness, global coverage, and high accuracy. Classic PPP (without ambiguity resolution) may be able to achieve a positional accuracy of 10 cm after a convergence time of several tens of minutes, for example. Techniques enabling PPP with ambiguity resolution (PPP-AR) have been introduced to achieve the same or better position accuracy with considerably reduced convergence time. Traditionally, PPP-AR methods typically use determined correction data in order to resolve carrier phase ambiguities.

For example, a server (i.e., a processing center) may process observations (i.e., measurements) from one or more reference stations to estimate code and phase biases in addition to satellite clock corrections (collectively referred to as corrections). The corrections determined at the server depend on some particular parameters that are set to arbitrary values.

The satellite clock error is a parameter that represents differences between the reference time maintained by the control segments, e.g. GPS Time (GPST), and the atomic clocks aboard the satellites. The satellite clock error needs to be accurately estimated, which is a mandatory prerequisite of PPP (e.g., PPP-AR). The more accurate the estimate of the satellite clock error, the more reliable and accurate the corresponding generated corrections will be.

Estimating the satellite clock error using a single reference station is relatively straightforward. The server may estimate the satellite clock error using the equation for a carrier phase measurement. The following equation represents the carrier phase measurement in its simplest form (neglecting atmospheric delays and some other terms):

$$L_r^i = \varrho_r^i + \delta_r - \delta^i + \lambda\left(n_r^i\right), \text{ where } \quad (1)$$

$L_r^i$ is the carrier phase measurement for satellite i and reference station r,

$\varrho_r^i$ is the distance traveled by the signal between satellite i and reference station r,

$\delta_r$ is the receiver clock error (in meters) for reference station r,

$\delta^i$ is the satellite clock error (in meters) for satellite i,

$\lambda$ is the carrier wavelength, and

$n_r^i$ is the ambiguity term, i.e., integer ambiguity term, corresponding to satellite i and reference station *r*.

The ambiguity parameter ($n_r^i$) in equation 1 should be an integer value. However, non-ideal factors cause the (least-squares) estimate of $n_r^i$ to be a non-integer value (e.g., a floating-point number). Such factors may include, but are not limited to, measurement noise, multipath effects, modeling errors, etc.

In equation 1, $n_r^i$ and the clock errors, e.g., $\delta_r$ and $\delta^i$, are correlated. Because $n_r^i$ is correlated to the clock errors, $n_r^i$ can be set to an arbitrary value in equation 1 to calculate, i.e., estimate, $\delta^i$. For example, $n_r^i$ may be arbitrarily set by rounding $n_r^i$ to an integer value such that $\delta^i$ can be estimated.

Estimating $\delta^i$ using a single reference station has drawbacks, and it is advantageous to instead estimate $\delta^i$ using a plurality of reference stations, e.g., a network of globally distributed reference stations. For example, estimating $\delta^i$ using a plurality of reference stations means that the global corrections are valid for a rover (i.e., moving object with a receiver that receives the corrections) at any location covered by the plurality of reference stations. When a single reference station is used to estimate $\delta^i$, the corrections from the single reference station are only valid for the rover when the rover is in a location such that the rover and reference station observe the same satellites.

Further, estimating $\delta^i$ using a plurality of reference stations is more accurate when compared to using a single reference station. Even more, estimating $\delta^i$ using a plurality of reference stations is more robust since the rover can continue to receive corrections when some reference stations in the network fail. When a rover is receiving corrections based on a single reference station and the single reference station fails, the rover can no longer receive corrections.

Moreover, and with a plurality of reference stations, corrections for more satellites are available to the rover since the plurality of reference stations receive signals from more satellites than a single reference station. Finally, a plurality of reference stations can be used to model atmospheric effects (e.g. ionosphere, troposphere) and interpolate such data among the plurality of reference stations to provide atmospheric corrections to the rover regardless of its location.

The described advantages associated with estimating $\delta^i$ using a plurality of reference stations instead of a single reference station are for illustrative purposes only, and the described advantages are not meant to be exhaustive for all potential advantages.

Although estimating $\delta^i$ using a plurality of reference stations that covers a large area or even the globe is advantageous over utilizing a single reference station, estimating $\delta^i$ using a plurality of reference stations introduces a complexity that needs to be accounted for. Consider two reference stations $r$ and $l$ and two satellites $i$ and $j$. The following equation for the double-difference (DD) carrier phase measurement ( $L_{rl}^{ij}$ ) in its simplest form (neglecting atmospheric delays and some other terms) may be written as:

$$L_{rl}^{ij} = \left(L_r^i - L_l^i\right) - \left(L_r^j - L_l^j\right) = \varrho_{rl}^{ij} + \lambda n_{rl}^{ij} \qquad (2)$$

where

$$\varrho_{rl}^{ij} = \left(\varrho_r^i - \varrho_l^i\right) - \left(\varrho_r^j - \varrho_l^j\right) \text{ and } n_{rl}^{ij} = \left(n_r^i - n_l^i\right) - \left(n_r^j - n_l^j\right),$$

where

　　$L_r^i$　is the carrier phase measurement for satellite i and reference station $r$,

　　$L_l^i$　is the carrier phase measurement for satellite i and reference station $l$,

　　$L_r^j$　is the carrier phase measurement for satellite $j$ and reference station $r$,

　　$L_l^j$　is the carrier phase measurement for satellite $j$ and reference station $l$,

　　$\varrho_r^i$　is the distance traveled by the signal between satellite i and reference station $r$,

　　$\varrho_l^i$　is the distance traveled by the signal between satellite i and reference station $l$,

　　$\varrho_r^j$　is the distance traveled by the signal between satellite $j$ and reference station $r$,

　　$\varrho_l^j$　is the distance traveled by the signal between satellite $j$ and reference station $l$,

　　$\lambda$ is the carrier wavelength,

　　$n_r^i$　is the zero-difference (ZD) ambiguity term for satellite $i$ and reference station $r$,

　　$n_l^i$　is the ZD ambiguity term for satellite $i$ and reference station $l$,

$n_r^j$ is the ZD ambiguity term for satellite $j$ and reference station $r$, and

$n_l^j$ is the ZD ambiguity term for satellite $j$ and reference station $l$.

As can be seen above, the clock errors, e.g., receiver and satellite clock errors, are eliminated in equation 2 because of the double-difference calculation. As a result, the DD ambiguity parameter ( $n_{rl}^{ij}$ ), which estimate is typically a floating-point number because of the non-ideal factors as discussed above, is not correlated with the clock errors. As a result, $(n_{rl}^{ij})$, cannot be set to an arbitrary value. Instead, $n_{rl}^{ij}$ must be resolved to its correct integer value so that a set of corresponding consistent zero-difference (ZD) ambiguities can be obtained. A set of consistent ZD ambiguities is required for PPP (e.g., PPP-AR) to generate accurate and reliable corrections across the network of reference stations.

As an example, consider the two receivers and two satellites corresponding to equation 2. For this example, three of the four ZD ambiguities can be arbitrarily set (rounded) to integer values. Additionally, the fourth ZD ambiguity can be solved using the resolved DD ambiguity with the three arbitrarily set ZD ambiguities. The following set of equations illustrates the mathematical relationship between the four ZD ambiguities and the DD ambiguity that is resolved to its correct integer:

$$\overline{n}_r^i = \text{int}\big(n_r^i\big)$$

$$\overline{n}_r^j = \text{int}\big(n_r^j\big)$$

$$\overline{n}_l^i = \text{int}\big(n_l^j\big)$$

$$\overline{n}_l^j = \overline{n}_{rl}^{ij} - \overline{n}_r^i + \overline{n}_r^j + \overline{n}_l^i$$

where $\overline{n}_r^i, \overline{n}_r^j$, and $\overline{n}_l^i$, are three ZD ambiguities that are set by arbitrarily rounding to integer values and $\overline{n}_{rl}^{ij}$ is the DD ambiguity that is resolved to its correct integer. As a result, the fourth ZD ambiguity can be computed using $\overline{n}_r^i, \overline{n}_r^j, \overline{n}_l^i$, and $\overline{n}_{rl}^{ij}$. Therefore, and in the example above, only three of the four ZD ambiguities can be arbitrarily set, while the remaining ZD ambiguity is estimated using the DD ambiguity that is resolved to its correct integer and the other three ZD ambiguities that are resolved by arbitrarily rounding.

As a logical extension, it can be understood that in the case of more than two reference stations and/or more than two satellites, all the ZD ambiguities for one station may be arbitrarily set (rounded) to integer values, and exactly one ZD ambiguity for each other reference station can be arbitrarily set (rounded) to an integer value. All other remaining ZD ambiguities must be computed, i.e., resolved, using the resolved DD ambiguities and the applicable arbitrarily set ZD ambiguities. Only then can a set of completely consistent ZD ambiguity values be obtained for the network of reference stations.

Therefore, and to obtain a set of completely consistent ZD ambiguities, PPP-AR implemented by a server with a plurality of reference stations requires that the DD ambiguities be resolved to their correct integer values.

One existing approach for ambiguity resolution is known as the Least-squares AMBiguity Decorrelation Adjustment (LAMBDA). LAMBDA is a computationally intensive method because it uses optimization algorithms and decorrelation techniques to estimate integer ambiguities. To that end, LAMBDA involves searching through a large discrete space of possible ambiguity combinations and requires substantial computational resources to handle the high dimensionality of the optimization problem efficiently. As the number of satellites and/or frequencies increases, the dimensionality of the problem grows significantly. This in turn increases the computational (e.g., processing) resources that are needed to estimate the integer ambiguities. Moreover, when LAMBDA processes data from more GNSS constellations, an increasing number of ambiguities are put into the LAMBDA search. This results in unreliability in choosing which candidate is best for selection when using a so-called ratio test (ratio test is based on comparison the two best candidates). Therefore, this approach is not only computationally expensive in terms of processing resources, but it also becomes more unreliable in choosing the best candidate using the ratio test as the search space becomes larger.

Another conventional algorithm to supplement LAMBDA is the Best Integer Equivariant (BIE) algorithm. The BIE algorithm provides a resulting set of ambiguities that is optimal from the point of view of its mean squared error (MSE). The BIE result is a weighted average of all possible candidates provided by the LAMBDA and the BIE algorithm generally produces a set of floating point (not integer) ambiguities.

For some applications, the fact that the BIE algorithm does not provide an integer set of ambiguities is acceptable. One such application is a rover-side solution with ambiguities fixed on real values. However, and as explained above, the set of floating-point ambiguity outputs of the BIE algorithm cannot be used for generating PPP-AR corrections when estimating the satellite clock error ($\delta^i$) using measurements from a plurality of reference stations.

Therefore, what is needed is an efficient technique for resolving DD ambiguity values to their correct integer values such that a complete and consistent set of ZD ambiguities can be obtained, which is required by server-side PPP-AR to generate consistent, accurate, and reliable corrections.

## SUMMARY

Techniques are provided for resolving floating-point ambiguities to their correct integer values for use with a positioning technique according to the one or more embodiments as described herein. For example, the floating-point ambiguities are double-difference (DD) ambiguity parameter values that are resolved to their correct integer values that can be used on the server-side to generate precise point positioning with ambiguity resolution (PPP-AR) corrections that can be transmitted to receivers.

Specifically, a processing center of a correction system may obtain DD ambiguity values based on observation measurements (e.g., carrier phase measurements) from a plurality of reference stations of the correction system. In an embodiment, the processing center may calculate DD ambiguity values for at least two reference stations and all unique pairs of a plurality of satellites.

A processor, e.g., a software module executed by the computer (e.g., processor of the computer), may generate a variance value for each of the DD ambiguity value resulting from BIE algorithm corresponding to a different unique pair of satellites. The variance value (i.e., BIE variance value) for a DD ambiguity value may be one indicator regarding the reliability of the DD ambiguity value. Specifically, a variance value (i.e., BIE variance value) that is closer to zero may be indicative of a more reliable DD ambiguity value, while a larger variance value may be indicative of a less reliable DD ambiguity value.

The processor may sort the DD ambiguity values based on the generated variance values, wherein DD ambiguity values are sorted/ordered based on reliability. For example, the DD ambiguity value with the lowest variance value ) would be the first DD ambiguity value in the sorted list, while the DD ambiguity value with the highest variance value ) would be the last DD ambiguity value in the sorted list.

The processor may select the DD ambiguity value from the first entry of the sorted list. The processor may analyze the fractional part of the DD ambiguity value as an additional indicator regarding the reliability of the DD ambiguity value. Specifically, a fractional part that is closer to zero may be indicative of a more reliable DD ambiguity value, while the fractional part that increases from zero towards 0.5 may be indicative of a more unreliable DD ambiguity value. In an embodiment, the fractional part is equal to the absolute value of the DD ambiguity value minus the closest integer value of the DD ambiguity value. If the fractional part of the DD ambiguity value from the first entry is less than a threshold value, the processor either selects the DD ambiguity value for an optimal set or adds the DD ambiguity value to the optimal set.

The processor may select the DD ambiguity value from the next entry of the sorted list. The processor may select the DD ambiguity value of the next entry for the optimal set or may add the DD ambiguity value of the next entry to the optimal set if (1) the fractional part of the DD ambiguity value is less than the threshold value and (2) the optimal set is independent if the DD ambiguity value of the next entry is added to the optimal set.

The processor may sequentially evaluate each DD ambiguity value in the list, which is sorted based on variance values, in a similar manner to determine if the DD ambiguity value of the next entry should be added to the optimal set. Therefore, the processor can use the variance values and the fractional parts of the DD ambiguity values as two conditions to assess the overall reliability of each DD ambiguity value to construct an optimal set of most reliable DD ambiguity values.

In an embodiment, the processor can round each DD ambiguity value in the optimal set, which has a fractional part that is less than a rounding threshold, to its closest integer value. As a result, the processor generates integer resolved DD ambiguity values. The processor can use the integer resolved DD ambiguity values with arbitrarily set zero-difference (ZD) ambiguity values to compute other ZD ambiguity values. As a result, a consistent set of ZD ambiguity values are obtained. The processing center of the correction system can use the consistent set of ZD ambiguity values to generate consistent, accurate, and reliable corrections (e.g., PPP-AR corrections). The generated corrections may be provided over a network to receivers that can optionally use the corrections to implement a positioning technique or solution.

## BRIEF DESCRIPTION OF THE DRAWINGS

The description below refers to the accompanying drawings, of which:

Fig. 1 is an illustration of an example system environment for resolving floating-point ambiguities to their correct integer values for use with a positioning technique according to the one or more embodiments as described herein;

Fig. 2 is an illustration of an example navigation correction system according to the one or more embodiments as described herein;

Fig. 3 is a flow diagram of a sequence of steps for determining a variance value for each DD ambiguity value according to the one or more embodiments as described herein;

Figs. 4A and 4B together constitute a flow diagram of a sequence of steps for utilizing variance values and the fractional part of each DD ambiguity value to construct an optimal set of DD ambiguity values that are most reliable for resolving to their correct integer values according to the one or more embodiments as described herein;

Fig. 5A is a non-oriented graph representing an optimal set when a first DD ambiguity value is added to the optimal set according to the one or more embodiments as described herein;

Fig. 5B is a non-oriented graph representing the optimal set when two DD ambiguity values are added to the optimal set according to the one or more embodiments as described herein;

Fig. 5C is a non-oriented graph representing the optimal set when three DD ambiguity values are added to the optimal set according to the one or more embodiments as described herein; and

Fig. 5D is a non-oriented graph representing the optimal set that includes the six DD ambiguity values from the example of Table 5 according to the one or more embodiments as described herein.

## DETAILED DESCRIPTION OF AN ILLUSTRATIVE EMBODIMENT

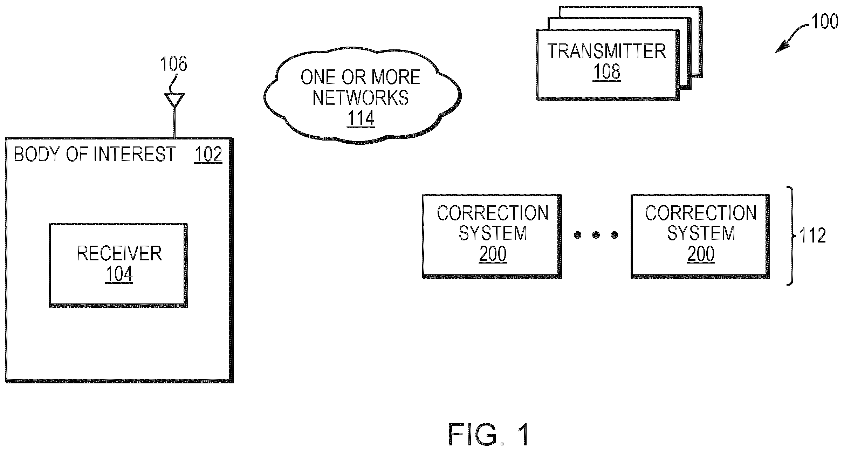

Fig. 1 is an illustration of an example system environment 100 for resolving floating-point ambiguities to their correct integer values for use with a positioning technique according to the one or more embodiments as described herein. System environment 100 includes a body of interest 102, e.g., a moving vehicle, a stationary object, etc. Coupled to the body of interest 102 may be a receiver 104 and an antenna 106. The antenna 106, coupled to the body of interest 102 and in communication with receiver 104, may receive one or more signals from one or more transmitters 108.

In an embodiment, the one or more transmitters 108 may be one or more Global Navigation Satellite System (GNSS) satellites that transmit one or more navigation signals, e.g., GNSS satellite signals (not shown). Although reference may be made to transmitters 108 being GNSS satellites transmitting GNSS satellite signals, it is expressly contemplated that the one or more embodiments as described herein may be utilized with any of a variety of different types of transmitters 108. For example, transmitters 108 may be terrestrial transmitters that transmit any of a variety of different navigation signals. As such, the description of transmitters 108 being GNSS satellites that transmit GNSS signals are for illustrative purposes only.

Additionally, system environment 100 includes one or more different navigation correction systems 112, where each individual navigation correction system may be referred to as a navigation correction system 200. As described herein, navigation correction system and correction system may be used interchangeably. Each correction system 200 may generate navigation correction data. As described herein, navigation corrections and corrections may be used interchangeably. Each correction system 200 may include processors, memory, storage, other hardware, software, and/or firmware (not shown).

Each correction system 200 may execute a correction algorithm that generates its corresponding corrections by setting some parameters to arbitrary values. In an embodiment, each correction system 200 may execute a precise point positioning with ambiguity resolution (PPP-AR) as the correction algorithm.

Each correction system 200 may provide, over one or more networks 114, corrections to receiver 104. The one or more networks 114 may be any wired or wireless network. For example, the one or more networks 114 may include, but are not limited to, an Internet Protocol (IP) based delivery system (wired or wireless), a mobile network such as Long-Term Evolution (LTE), or the 5th generation (5G) mobile network, a satellite-based delivery system such as Inmarsat, etc.

Receiver 104 may, based on the reception of signals at antenna 106, produce raw measurements (e.g., GNSS raw measurements), such as pseudoranges, carrier phases, and Doppler velocities; position (e.g., GNSS position), velocity (e.g., GNSS velocity), attitude, and time (e.g., GNSS time), position covariance, time covariance, and velocity covariance; and, as appropriate, GNSS observables ("GNSS data"). Receiver 104 may include processors, memory, storage, other hardware, software, and/or firmware (not shown).

The receiver 104 may also utilize the GNSS data with the received corrections to mitigate errors (e.g., orbit, clock, antenna, and/or atmospheric induced errors), resulting in the calculation of decimeter-level or better positioning accuracy with reduced convergence time. In an embodiment, receiver 104 may utilize the GNSS data with the received corrections to implement precise point positioning with ambiguity resolution (PPP-AR) to achieve a positional accuracy of 10 cm or better with reduced convergence time. The corrections may include, but are not limited to, satellite orbit and clock corrections, ionospheric and tropospheric corrections, code biases, phase biases, , etc.

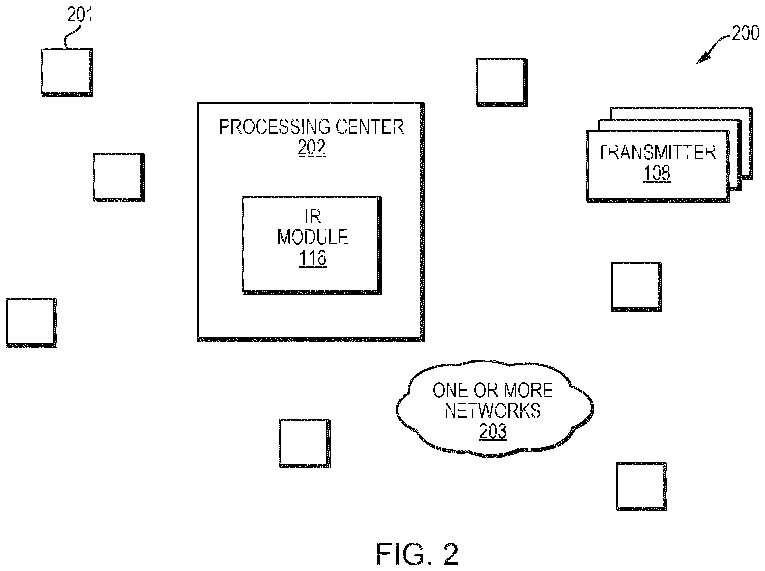

Fig. 2 is an illustration of an example navigation correction system 200 according to the one or more embodiments as described herein. The example navigation correction system 200 may include a plurality of reference stations (e.g., base stations) 201 that define a network. Each of the reference stations 201 may be installed at a precisely known location and receive signals from transmitters 108. The number and locations of the reference stations 201 in Fig. 2 are for illustrative purposes only. For simplicity and ease of understanding, only one reference station 201 in Fig. 2 includes reference number 201, but it is expressly contemplated that each of reference stations in Fig. 2 are associated with reference number 201. In an embodiment, the navigation correction system 200 is a global correction system with the reference stations 201 distributed over the globe.

The navigation correction system 200 may also include processing center 202. The location of processing center 202 in relation to reference stations 201 is for illustrative purposes only. In an embodiment, processing center 202 is a computing device (e.g., server) with a processor (not shown) and a memory (not shown). Processing center 202 can generate corrections based on the signals received from the plurality of reference stations 201. The processing center 202 may receive the signals, with observation measurements (e.g., carrier phase measurements), from the plurality of reference stations 201 over one or more networks 203. The one or more networks 203 may be the same as networks 114 of Fig. 1 or different networks. The one or more networks 203 may be any wired or wireless network. For example, the one or more networks 203 may include, but are not limited to, an IP based delivery system (wired or wireless), a mobile network such as LTE, or the 5G mobile network, a satellite-based delivery system such as Inmarsat, etc.

The processing center 202 can perform double-difference (DD) calculations for the measurements (e.g., carrier phase measurements) received from a plurality of reference stations 201. For example, the processing center can DD carrier phase measurements between pairs of reference stations 201 and pairs of transmitters 108. As a result, common errors such as clock errors are cancelled out, leaving just the DD ambiguities (i.e., DD ambiguity values) as the only unknowns. The DD ambiguity values should be integer values. However, non-ideal factors cause the estimates of the DD ambiguity values to be floating-point numbers, i.e., non-integers. Such factors may include, but are not limited to, measurement noise, multipath effects, modeling errors, etc.

The processing center 202 may include integer resolution (IR) module 116 that may implement a correction algorithm (e.g., PPP-AR) that requires that the DD ambiguity values be resolved to their correct integer values. The IR module 116 may also implement the one or more embodiments as described herein. Specifically, and as will be described in further detail below, the IR module 116 may resolve DD ambiguity values to their correct integer values. As a result, a set of consistent ZD ambiguity values can be obtained, which may be a requirement for the correction algorithm (e.g., PPP-AR) to generate consistent, accurate, and reliable corrections.

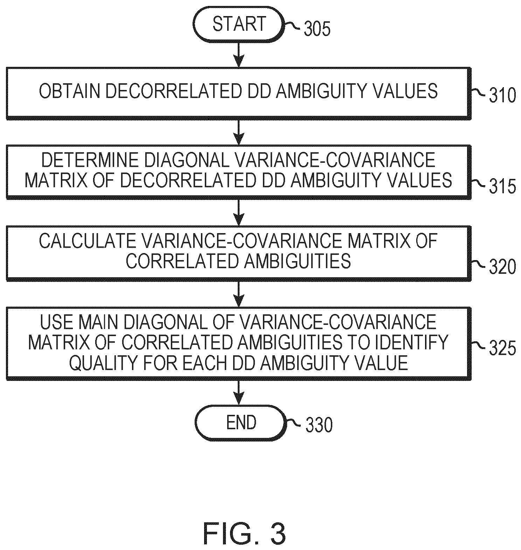

Specifically, and as will be described in further detail below in relation to the flow diagram of Fig. 3, the one or more embodiments as described herein can calculate a variance value for each DD ambiguity value that is the result of the BIE algorithm and that is typically a floating-point number. As described herein, variance value should be understood to be a BIE variance value that represents the variance of an output (e.g., DD ambiguity value) obtained based on the execution of the BIE algorithm. The computed variance value may be one indicator regarding the reliability of the DD ambiguity value. Specifically, a variance value that is closer to zero may be indicative of a more reliable DD ambiguity value, while a variance value increasing from zero may be indicative of a less reliable DD ambiguity value.

The IR module 116 may also analyze the fractional part of each DD ambiguity value as an additional indicator to assess the reliability of the DD ambiguity value according to the one or more embodiments as described herein. In an embodiment, the fractional part is equal to the absolute value of the DD ambiguity value minus the closest integer value of the DD ambiguity value. A fractional part that is closer to zero may be indicative of a more reliable DD ambiguity value, while the fractional part that increases from zero towards 0.5 may be indicative of a more unreliable DD ambiguity value.

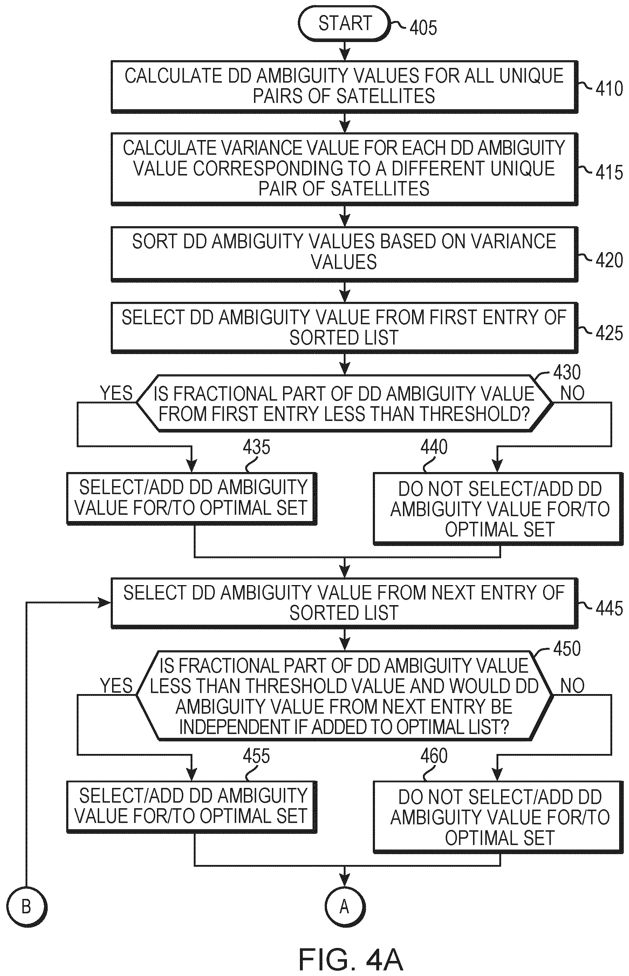

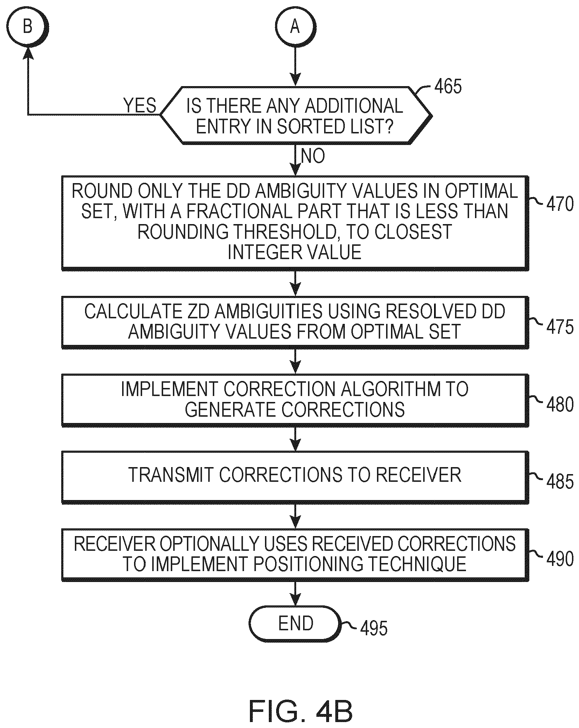

As will be described in further detail below with relation to the flow diagram of Figs. 4A and 4B, the IR module 116 may use the variance values and the fractional parts of the DD ambiguity values as two conditions to assess the overall reliability of each DD ambiguity value to construct an optimal set of most reliable DD ambiguity values. By using the two conditions, the one or more embodiments as described herein ensure that rounding a DD ambiguity value of the optimal set to its closest integer results in rounding to the correct integer. The DD ambiguity values in the optimal set, which are resolved to their correct integer values according to the one or more embodiments as described herein, can then be utilized to estimate consistent, accurate, and reliable corrections (clock and phase biases) that can be transmitted to and used by receiver 104 to obtain positioning accuracy and convergence time that is commonly associated with PPP-AR.

Fig. 3 is a flow diagram of a sequence of steps for determining a variance value for each DD ambiguity value according to the one or more embodiments as described herein. In relation to the examples of Fig. 3, each DD ambiguity value may be based on a DD calculation for carrier phase measurements between pairs of reference stations 201 and pairs of transmitters 108. The description herein includes general equations with a corresponding equation number. However, the equations for specific examples do not include equation numbers.

The procedure of Fig. 3 starts at step 305 and continues to step 310. At step 310, correction system 200 obtains decorrelated DD ambiguity values. In an embodiment, the decorrelated DD ambiguity values may be Best Integer Equivariant (BIE) results. Specifically, processing center 202 of correction system 200 may execute a conventional BIE algorithm to obtain conventional BIE results. In an embodiment, the IR module 116 or other software (not shown) of processing center 202 executes the conventional BIE algorithm to obtain conventional BIE results. For example, the BIE algorithm may be based on the following equation:

$$\hat{z} = \sum_{i=1}^{M} \overline{w}_i z_i, \text{ where } \overline{w}_i = \frac{w_i}{\sum_{i=1}^{M} w_i} \text{where} \qquad (3)$$

$\hat{z}$ is a BIE results and a vector of decorrelated DD ambiguity values;
$z_i$ is a vector of candidate DD ambiguity values;
$w_i$ is the weight of individual candidates; and
M = the chosen number of candidates.

For this example, let it be assumed that there are 300 candidates. As such, there are 300 $z_i$ vectors. Candidate 1 (e.g., $z_1$) is multiplied by its weight, candidate 2 (e.g., $z_2$) is multiplied by its weight, and so forth. The results of the 300 multiplications are summed together to produce the BIE results of $\hat{z}$.

Moreover, the BIE algorithm may calculate correlated DD ambiguities based on the following equation:

$$\hat{a} = Z^{-1}\hat{z}, \text{ where} \qquad (4)$$

$\hat{a}$ is a BIE result and a vector of correlated DD ambiguity values;
Z is the integer unimodular matrix. Z may be computed using any of a variety of different conventional algorithms.

Table 1 below includes example correlated DD ambiguity values (e.g., BIE results) for two reference stations 201 and seven different transmitters 108 that transmit signals over the L1 frequency.

Table 1

| First Satellite identifier | Second Satellite identifier | Frequency | DD ambiguity identifier $\nabla \Delta n^{(i)(r)}$ | BIE Result |
|---|---|---|---|---|
| S2 | S1 | L1 | $n^{(S1)(S2)}$ | -4.4707 |
| S3 | S1 | L1 | $n^{(S1)(S3)}$ | -32.4956 |
| S4 | S1 | L1 | $n^{(S1)(S4)}$ | -14.4296 |
| S5 | S1 | L1 | $n^{(S1)(S5)}$ | -6.4289 |
| S6 | S1 | L1 | $n^{(S1)(S6)}$ | -19.4949 |
| S7 | S1 | L1 | $n^{(S1)(S7)}$ | -36.4858 |

As such, and in the example of Table 1, â is a vector of the six correlated DD ambiguity values that are in the fifth column titled "BIE result". Each correlated DD ambiguity value corresponds to the combination of satellites as indicated in columns 1 and 2 and the ambiguity parameter identifier of column 4.

As depicted in Table 1, the correlated DD ambiguity values of the BIE results are floating-point numbers with fractional parts that are close to 0.5. In this context, fractional part is equal to the absolute value of the correlated DD ambiguity value minus the closest integer of the correlated DD ambiguity value. Because the fractional parts are close to 0.5, simply performing a rounding operation of these values for integer ambiguity resolution is less accurate than, for example, if the fractional parts were closer to 0. Stated differently, because the fractional parts of the correlated DD ambiguity values of the BIE results are close to 0.5, it is more likely that the rounding operation will result in rounding to the wrong integer value than if the fractional parts were closer to 0. Therefore, the correlated DD ambiguity values of the BIE results in Table 1 cannot simply be rounded to their closest integer values since doing so may result in rounding to the wrong integer value.

However, the sole fact that the fractional part of a DD ambiguity value is close to 0 does not provide absolute certainty that rounding to the closest integer value will result in rounding to the correct integer value. This is because there may be situations where a resulting DD ambiguity is close to an integer since the DD ambiguity value is a result of averaging values symmetrically spread around a particular integer value. For example, the average of 3, 6, and 9 results in a perfect integer value of 6. However, it is known that the individual values of 3, 6, and 9 are spread across a plurality of different integer values and the average is not truly indicative of the correct integer for the DD ambiguity value. Because of this type of scenario, the fractional part of the DD ambiguity value being close to 0 cannot provide absolute certainty that rounding to the closest integer will be correct.

Therefore, the one or more embodiments as described herein consider the two following criterion in assessing the reliability of a DD ambiguity value - (1) the fractional part (e.g., how close the DD ambiguity is to a nearest integer) and (2) how spread out are the values that are used to compute the DD ambiguity value. How spread out the values are from each other can be given by an empirical variance.

To that end, a variance value for each DD ambiguity value, as described further below in relation to the flow diagram of Fig. 3, can be used as one condition in assessing the reliability of each DD ambiguity value. As will be described later in relation to the flow diagram of Figs. 4A and 4B, the IR module 116 can also analyze the fractional parts of the DD ambiguity values as a second condition for assessing reliability, and then the IR module 116 can use both conditions together to construct an optimal set of most reliable DD ambiguity values that can be rounded to their correct integer values.

Referring back to Fig. 3, the procedure continues from step 310 to step 315. At step 315, the IR module 116 determines a diagonal variance-covariance matrix for the decorrelated DD ambiguity values. For example, the IR module 116 may determine a variance-covariance matrix for the BIE results obtained in step 310. Let it be assumed that $\hat{z}_n$ represents the $n_{th}$ element of $\hat{z}$, $z_{i,n}$ represents the $n_{th}$ element of the candidate vector $z_i$, and N represents the number of decorrelated DD ambiguity values (i.e., elements) in $\hat{z}$. As such, N is six and $\hat{z}_n$, is one of $\hat{z}_1$ through $\hat{z}_6$. $\hat{z}_1 \hat{z}_2$.

Further, and as indicated above, there are 300 candidates and thus M is equal to 300. Therefore, there are 300 candidate vectors $z_i$, and $z_i$ is one of $z_1$ through $z_{300}$ that are utilized to calculate $\hat{z}$.

According to the one or more embodiments as described herein, the IR module 116 may calculate the variance of each $\hat{z}_n$ using the value of $\hat{z}_n$ and the values of $\hat{z}_{i,n}$ from each of the candidate vectors. As an illustrative example, let it be assumed that n is 1. Therefore, $\hat{z}_1$ is the first element in $\hat{z}$. The IR module 116 may compute the variance of $\hat{z}_1$. Specifically, the IR module 116 may compute the variance of $\hat{z}_1$ using each of the values from the first element of each of the candidate vectors, which in this example is candidate vector $z_1$ through candidate vector $z_{300}$. In an embodiment, the IR module 116 may compute the variance for $\hat{z}_n$ (e.g., $\hat{z}_1$) based on the following equation:

$$\mathrm{var}\left(\hat{z}_n\right) = \sum_{i=1}^{M} \overline{w}_i \left(z_{i,n} - \hat{z}_n\right)^2 / (M - 1) \quad (5)$$

As another example, $\hat{z}_2$ is the second element in $\hat{z}$ that . Therefore, the IR module 116 computes the variance of $\hat{z}_2$ using the equation above and the values from the second elements of each of the 300 candidate vectors. As such, the IR module 116 computes $var(\hat{z}_1)$, $var(\hat{z}_2)$, $var(\hat{z}_3)$, $var(\hat{z}_4)$, $var(\hat{z}_5)$, and $var(\hat{z}_6)$ for the decorrelated DD ambiguity values using the equation above.

In an embodiment, the IR module 116 may construct the diagonal variance-covariance matrix using the $var(\hat{z}_n)$ for each of the N elements of $\hat{z}$. For example, IR module 116 may construct the diagonal variance-covariance matrix for $\hat{z}$ as:

$$Q_{\hat{z}} = \begin{pmatrix} \mathrm{var}\left(\hat{z}_1\right) & & \\ & \ddots & \\ & & \mathrm{var}\left(\hat{z}_N\right) \end{pmatrix} \quad (6)$$

For the example as described herein where N is six (e.g., $\hat{z}$ is the BIE results that is a vector of six decorrelated DD ambiguity values), the IR module 116 may determine, i.e., construct, the diagonal variance-covariance matrix as:

$$Q_{\hat{z}} = \begin{pmatrix} \mathrm{var}\left(\hat{z}_1\right) & & \\ & \ddots & \\ & & \mathrm{var}\left(\hat{z}_6\right) \end{pmatrix}$$

Referring back to Fig. 3, the procedure continues from step 315 to step 320. At Step 320, the IR module 116 calculates the variance-covariance matrix of correlated ambiguities. In an embodiment, the IR module 116 calculates the variance-covariance matrix of correlated ambiguities ($Q_{\hat{a}}$ as:

$$Q_{\hat{a}} = Z^{-1} Q_{\hat{z}} Z^{-T}, \text{ where} \qquad (7)$$

Z is the integer unimodular matrix and T is the transpose operation. The IR module 116 may compute Z using any of a variety of different conventional algorithms.

The procedure continues from step 320 to step 325. At step 325, the IR module 116 uses the main diagonal of the variance-covariance matrix of correlated ambiguities to identify a quality for each correlated DD ambiguity value.

For example, the first element (e.g., first variance value) of the main diagonal (1,1) of $Q_{\hat{a}}$ may be used to quantify a quality/reliability of $\hat{}_1$, that is -4.4707 and the first correlated DD ambiguity value in Table 1. Similarly, the second element (e.g., second variance value) of the main diagonal (2, 2) of $Q_{\hat{a}}$ may be used to quantify a quality/reliability of $\hat{}_2$ that is -32.4956 and the second correlated DD ambiguity value in Table 1, and so forth.

Table 2 that is produced below is similar to Table 1. However, Table 2 includes an additional column titled "Quality of BIE Result". This column includes the variance value, determined as described above in relation to the flow diagram of Fig. 3, for each corresponding BIE result (e.g., correlated DD ambiguity value). Additionally, the frequency column has been removed for simplicity.

Table 2

| First Satellite identifier | Second Satellite identifier | DD ambiguity identifier $\nabla \Delta n^{(i)(r)}$ | BIE Result | Quality of BIE Result |
|---|---|---|---|---|
| S2 | S1 | $\nabla \Delta n^{(S2)(S1)}$ | -4.4707 | $\pm 0.0658$ |
| S3 | S1 | $\nabla \Delta n^{(S3)(S1)}$ | -32.4956 | $\pm 0.0714$ |
| S4 | S1 | $\nabla \Delta n^{(S4)(S1)}$ | -14.4296 | $\pm 0.0743$ |
| S5 | S1 | $n^{(S5)(S1)}$ | -6.4289 | $\pm 0.0745$ |
| S6 | S1 | $\nabla \Delta n^{(S6)(S1)}$ | -19.4949 | $\pm 0.0716$ |
| S7 | S1 | $\nabla \Delta n^{(S7)(S1)}$ | -36.4858 | $\pm 0.0691$ |

Each variance value provides an indication regarding the reliability of the corresponding BIE result (e.g., the corresponding correlated DD ambiguity value in $\hat{z}$). In an embodiment, a variance value that gets closer to zero is indicative of an increasingly more reliable BIE result. Conversely, a variance value that gets increasingly larger than zero is indicative of an increasingly less reliable BIE result.

Therefore, and when variance is used as an indicator for reliability, the BIE result of -4.4707 for $\nabla \Delta n^{(S2)(S1)}$ is the most reliable BIE result in Table 2 because 0.0658 is the variance value that is closest to zero in Table 2. Further, and when variance is used as an indicator for reliability, the BIE result of -6.4289 is the least reliable BIE result in Table 2 because 0.0745 is the largest variance value in Table 2. The procedure of Fig. 3 ends at step 330.

Accordingly, variance values determined for correlated DD ambiguity values, as described in relation to Fig. 3, can be used as a condition to assess the reliability of the correlated DD ambiguity values. This is an improvement when compared to existing conventional integer ambiguity resolution techniques. As such, the one or more embodiments as described herein provide an improvement in the existing technological field of integer ambiguity resolution for positioning solutions.

Although the variance value can be used as a condition to assess the reliability of a DD ambiguity value, the variance value by itself cannot be utilized to assess absolute reliability of the DD ambiguity value. This is because consistent candidate values can still result in fractional parts that are, for example, close to 0.5. Because the fractional part is close to 0.5, the rounding operation may still result in rounding the DD ambiguity value to the wrong integer value.

Therefore, and as will be described in relation to the flow diagram of Figs. 4A and 4B, the IR module 116 can use an analysis of the fractional part of each correlated DD ambiguity value as a second condition for assessing reliability. Specifically, and as will be described in further detail below in relation to Figs. 4A and 4B, the IR module 116 can (1) determine a variance value of each correlated DD ambiguity value that is used as a first condition of reliability and (2) analyze the fractional part of each correlated DD ambiguity value that is used as a second condition of reliability. The IR module 116 can then use both conditions to assess the overall reliability of each correlated DD ambiguity value to construct an optimal set of most reliable DD ambiguity values that can be rounded to their correct integer values.

Figs. 4A and 4B together constitute a flow diagram of a sequence of steps for utilizing variance values and the fractional part of each DD ambiguity value to construct an optimal set of DD ambiguity values that are most reliable for resolving to their correct integer values according to the one or more embodiments as described herein. The procedure of Figs. 4A and 4B starts at step 405 and continues to step 410. At step 410, the IR module 116 calculates the DD ambiguity values for all unique pairs of satellites. Continuing with the example of Tables 1 and 2, there are seven satellites. Namely, S1 through S7. The total number 4of DD ambiguities for all unique pairs of S number of satellites may be represented as: S(S-1)/2.

As such, and in the example of Tables 1 and 2, there are 21 DD ambiguity values (e.g., correlated DD ambiguity values) for the different combinations of unique pairs of satellites. The different combinations of unique pairs of satellites include: S2/S1, S3/S1, S4/S1, S5/S1, S6/S1, S7/S1, S3/S2, S4/S2, S5/S2, S6/S2, S7/S2, S4/S3, etc.

A set of DD ambiguities are said to be dependent if at least one DD ambiguity can be expressed as a linear combination of a plurality of the other DD ambiguities in the set. Otherwise, the set of DD ambiguities is said to be an independent set. In Table 2, the set of six DD ambiguities is independent. Specifically, no single ambiguity parameter can be expressed as a linear combination of the other ambiguity parameters in the set. For example, $n^{(S1)(S2)}$ cannot be expressed as a linear combination of any of $n^{(S1)(S3)}$, $n^{(S1)(S4)}$, $n^{(S1)(S5)}$, $n^{(S1)(S6)}$, and $n^{(S1)(S7)}$. Similarly, no other single ambiguity parameter in the set of Table 2 can be expressed as a linear combination of the other remaining ambiguity parameters in the set.

For the example of Table 2, the set of correlated DD ambiguity values in the fifth column that are independent may be obtained based on the execution of the BIE algorithm as described above in relation to step 310 of Fig. 3.

The other 15 DD ambiguities, which are dependent DD ambiguity parameters, may be calculated by the IR module 116 based on the following equation:

$$\nabla \Delta n^{ij} = \nabla \Delta n^{ir} - \nabla \Delta n^{jr}, i \neq r \wedge j \neq r \wedge i > j. \qquad (8)$$

Based on the example in Tables 1 and 2, r is 1, i is a value of two through seven, j is a value of two through seven, $\nabla \Delta n^{ij}$ is the DD ambiguity value that is dependent, $\nabla \Delta n^{ir}$ is a particular DD ambiguity value for a DD ambiguity parameter based on the values of r and i, and $\nabla \Delta n^{ir}$ is a particular DD ambiguity value for a DD ambiguity parameter based on the values of r and j.

As an example, consider the DD ambiguity parameter of $\nabla \Delta n^{(S3)(S2)}$ for satellites S3 and 2S. The IR module 116 may calculate the DD ambiguity value, based on equation 5, as:

$$\nabla \Delta n^{(S3)(S2)} = \nabla \Delta n^{(s3)(s1)} - \nabla \Delta n^{(s2)(s1)}$$

Each of the other DD ambiguity parameter values may be calculated similarly. Therefore, and for the example of Tables 1 and 2, the 21 DD ambiguity values can be determined for all unique pairs of 7 satellites. Because of the non-ideal factors as described herein, the 21 DD ambiguity values (e.g. correlated DD ambiguity values) are likely to be floating-point numbers.

Referring back to Fig. 4A, the procedure continues from step 410 to step 415. At step 415, the IR module 116 calculates a variance value for each DD ambiguity value (e.g., correlated DD ambiguity value). For the example as described herein, there are 21 DD ambiguity values determined in step 410. As such, the IR module 116 calculates a variance value for each of the 21 DD ambiguity values.

In an embodiment, the IR module 116 may calculate the variance value included in the sixth column of Table 2, for the 6 correlated DD ambiguity values, as described above in relation to Fig. 3.

For each of the other 15 DD ambiguity values corresponding to the other unique pairs of satellites, the IR module 116 may calculate the variance value $var(\nabla \Delta n^{ij})$ based on the following equation:

$$var \left( \nabla \Delta n^{ij} \right) = Q_{\hat{a}}[J_{ir}, J_{ir}] - 2 Q_{\hat{a}}[J_{ir}, J_{jr}] + Q_{\hat{a}}[J_{jr}, J_{jr}], \text{ where} \qquad (9)$$

$var(\nabla \Delta^{ij})$ is the variance value, $Q_{\hat{a}}$ is the variance-covariance matrix of correlated ambiguities calculated at step 320 of Fig. 3, $J_{ir}$ is the index of the ambiguity formed with satellites i and r, $J_{jr}$ is the index of the ambiguity formed with satellites j and r, and [x, y] represents an element at row x and column y.

As an example, let it be assumed that the IR module 116 is calculating the variance of $\nabla \Delta n^{(S3)(S2)}$, which would be represented as $var(\nabla \Delta n^{(S3)(S2)})$. In this example, i is satellite S3, j is satellite S2, and r is satellite S1. $J_{ir}$ is $J_{(s3)(s1)}$, which corresponds to the second row of Table 2. That is, the second row of Table 2 corresponds to the unique pair of satellites S3 and S1. Thus, $J_{ir}$ is a value of 2. Further, $J_{jr}$ is $I_{(s2)(s1)}$ and corresponds to the first row of Table 2. Thus, $J_{jr}$ is a value of 1. Therefore, $Q_{\hat{a}}[J_{ir}, J_{ir}]$ is $Q_{\hat{a}}[2,2]$. Further, $Q_{\hat{a}}[J_{ir}, J_{jr}]$ is $Q_{\hat{a}}[2,1]$. Moreover, $Q_{\hat{a}}[J_{jr}, J_{jr}]$ [1,1]. Therefore,

$$var \left( \nabla \Delta n^{(S3)(S2)} \right) = Q_{\hat{a}}[2,2] - 2 Q_{\hat{a}}[2,1] + Q_{\hat{a}}[1,1]$$

The IR module 116 may calculate the variance value for each of the other remaining 14 DD ambiguity values in a similar manner. For the example as described herein, Table 3 includes example variance values corresponding to each of the 21 DD ambiguity values (e.g., 31 correlated DD ambiguity values). For simplicity, the BIE result and frequency columns, which are included in Tables 1 and 2, have been removed from Table 3.

Table 3

| First Satellite identifier | Second Satellite identifier | DD ambiguity identifier $\nabla \Delta n^{(i)(j)}$ | Quality of BIE Result |
|---|---|---|---|
| S2 | S1 | $\nabla \Delta n^{(S2)(S1)}$ | ±0.0658 |
| S3 | S1 | $\nabla \Delta n^{(S3)(S1)}$ | ±0.0714 |
| S4 | S1 | $\nabla \Delta n^{(S4)(S1)}$ | ±0.0743 |
| S5 | S1 | $\nabla \Delta n^{(S5)(S1)}$ | ±0.0745 |
| S6 | S1 | $\nabla \Delta n^{(S6)(S1)}$ | ±0.0716 |
| S7 | S1 | $\nabla \Delta n^{(S7)(S1)}$ | ±0.0691 |
| S3 | S2 | $\nabla \Delta n^{(S3)(S2)}$ | ±0.0283 |
| S4 | S2 | $\nabla \Delta n^{(S4)(S2)}$ | ±0.0205 |
| S5 | S2 | $\nabla \Delta n^{(S5)(S2)}$ | ±0.0203 |
| S6 | S2 | $\nabla \Delta n^{(S6)(S2)}$ | ±0.0282 |
| S7 | S2 | $\nabla \Delta n^{(S7)(S2)}$ | ±0.0306 |
| S4 | S3 | $\nabla \Delta n^{(S4)(S3)}$ | ±0.0347 |
| S5 | S3 | $\nabla \Delta n^{(S5)(S3)}$ | ±0.0348 |
| S6 | S3 | $\nabla \Delta n^{(S6)(S3)}$ | ±0.0030 |
| S7 | S3 | $\nabla \Delta n^{(S7)(S3)}$ | ±0.0106 |
| S5 | S4 | $\nabla \Delta n^{(S5)(S4)}$ | ±0.0030 |
| S6 | S4 | $\nabla \Delta n^{(S6)(S4)}$ | ±0.0348 |
| S7 | S4 | $\nabla \Delta n^{(S7)(S4)}$ | ±0.0333 |
| S6 | S5 | $\nabla \Delta n^{(S6)(S5)}$ | ±0.0347 |
| S7 | S5 | $\nabla \Delta n^{(S7)(S5)}$ | ±0.0337 |
| S7 | S6 | $\nabla \Delta n^{(S7)(S3)}$ | ±0.0119 |

Referring back to Fig. 4A, the procedure continues from step 415 to step 420. At step 420, the IR module 116 sorts the DD ambiguity values based on the variance values. For example, the IR module 116 sorts all the DD ambiguity values based on the variance values included in column 4 of Table 3 that are calculated at step 415. Specifically, the IR module 116 may sort Table 3 based on the variance values, with the lowest value being prioritized, i.e., at the top, and the highest value being at the bottom. Table 4 is the sorted list for the example described herein based on the absolute value of the variance values (i.e., Quality of BIE result).

Table 4

| First Satellite identifier | Second Satellite identifier | DD ambiguity identifier $\nabla \Delta n^{(i)(j)}$ | Quality of BIE Result |
|---|---|---|---|
| S6 | S3 | $\nabla \Delta n^{(S6)(S3)}$ | ±0.0030 |
| S5 | S4 | $\nabla \Delta n^{(S5)(S4)}$ | ±0.0030 |
| S7 | S3 | $\nabla \Delta n^{(S7)(S3)}$ | ±0.0106 |
| S7 | S6 | $\nabla \Delta n^{(S7)(S3)}$ | ±0.0119 |
| S5 | S2 | $\nabla \Delta n^{(S5)(S2)}$ | ±0.0203 |
| S4 | S2 | $\nabla \Delta n^{(S4)(S2)}$ | ±0.0205 |
| S6 | S2 | $\nabla \Delta n^{(S6)(S2)}$ | ±0.0282 |
| S3 | S2 | $\nabla \Delta n^{(S3)(S2)}$ | ±0.0283 |

(continued)

| First Satellite identifier | Second Satellite identifier | DD ambiguity identifier $\nabla \varDelta n^{(i)(j)}$ | Quality of BIE Result |
|---|---|---|---|
| S7 | S2 | $\nabla \varDelta n^{(S7)(S2)}$ | $\pm 0.0306$ |
| S7 | S4 | $\nabla \varDelta n^{(S7)(S4)}$ | $\pm 0.0333$ |
| S7 | S5 | $\nabla \varDelta n^{(S7)(S5)}$ | $\pm 0.0337$ |
| S4 | S3 | $\nabla \varDelta n^{(S4)(S3)}$ | $\pm 0.0347$ |
| S6 | S5 | $\nabla \varDelta n^{(S6)(S5)}$ | $\pm 0.0347$ |
| S5 | S3 | $\nabla \varDelta n^{(S5)(S3)}$ | $\pm 0.0348$ |
| S6 | S4 | $\nabla \varDelta n^{(S6)(S4)}$ | $\pm 0.0348$ |
| S2 | S1 | $\nabla \varDelta n^{(S2)(S1)}$ | $\pm 0.0658$ |
| S7 | S1 | $\nabla \varDelta n^{(S7)(S1)}$ | $\pm 0.0691$ |
| S3 | S1 | $\nabla \varDelta n^{(S3)(S1)}$ | $\pm 0.0714$ |
| S6 | S1 | $\nabla \varDelta n^{(S6)(S1)}$ | $\pm 0.0716$ |
| S4 | S1 | $\nabla \varDelta n^{(S4)(S1)}$ | $\pm 0.0743$ |
| S5 | S1 | $\nabla \varDelta n^{(S5)(S1)}$ | $\pm 0.0745$ |

Table 4 includes some variance values that are identical values because the variance values have been rounded to four decimal places for simplicity and ease of understanding. However, it should be expressly understood that if two adjacent variance values in Table 4 are the same, the higher positioned variance value in Table 4 would have a smaller variance value if the variance values were not rounded to four decimal places.

The DD ambiguity parameter of $\nabla \varDelta n^{(S6)(S3)}$, which corresponds to unique pair of satellites S6 and S3 and has a DD ambiguity value (not included in Table 4), has the smallest variance value of all the variance values in Table 4. Therefore, the DD ambiguity parameter of $\nabla \varDelta n^{(S6)(S3)}$ is the first entry in the sorted list of Table 4. Conversely, the DD ambiguity parameter of $\nabla \varDelta n^{(S5)(S1)}$, which corresponds to unique pair of satellites S5 and S1 and has a DD ambiguity value (not included in Table 4), has the largest variance value of all the variance values in Table 4. Therefore, the DD ambiguity parameter of $\nabla \varDelta n^{(S5)(S1)}$ is the last entry in the sorted list of Table 4.

Referring back to Fig. 4A, the procedure continues from 420 to step 425. At step 425, the IR module 116 selects the DD ambiguity value from the first entry of the sorted list (e.g., Table 4). For the example described herein, the IR module 116 selects the correlated DD ambiguity value from the first entry that corresponds to unique pair of satellites S6 and S3 that has the smallest variance value (i.e., smallest absolute value) in the sorted list of 0.0030.

The procedure continues from step 425 to step 430. At step 430, the IR module 116 determines if the fractional part of the DD ambiguity value from the first entry is less than a threshold value. For this example, let it be assumed that the correlated DD ambiguity value for $\nabla \varDelta n^{(S6)(S3)}$ is -13.0006. Further, let it be assumed that for the purposes of this example the threshold is set to 0.5, which means that every correlated DD ambiguity value meets the condition that its fractional part is less than the chosen threshold (the fractional part is not greater than 0.5). In an embodiment, the threshold may be set to any positive (greater than zero) value.

According to the one or more embodiments as described herein, the threshold may be any value. Additionally, the threshold may be user-defined or preconfigured. As explained above, the fractional part is equal to the absolute value of the DD ambiguity value minus the closest integer of the DD ambiguity value. As such, the fractional part of a DD ambiguity value may be represented as:

$$\text{fractional part} = \text{abs}(X\text{-nint}(X)), \text{ where} \qquad (10)$$

where abs is the absolute value, X is the DD ambiguity value, and nint(X) is the closest integer of the DD ambiguity value.

For the example in the first entry from Table 4, the DD ambiguity value is -13.0006. Therefore, X is -13.0006 and nint(X) is -13. The fractional part for the DD ambiguity value of -13.0006 is 0.0006. Therefore, the fractional part of the DD ambiguity value in the first entry is less than the threshold value of 0.5.

If the fractional part is less than the threshold value, then the procedure continues from step 430 to step 435. At step 435, the IR module 116 selects the DD ambiguity value from the first entry for the optimal set or adds the DD ambiguity value from the first entry to the optimal set. If the fractional part is not less than the threshold value, then the procedure continues from step 430 to step 440. At step 440, the IR module 116 does not select the DD ambiguity value from the first entry for the optimal set and does not add the DD ambiguity value from the first entry to the optimal list.

For this example, the fractional part of 0.0006 is less than the threshold value of 0.5. Therefore, the IR module 116 selects the DD ambiguity value of -13.0006 for the optimal set or adds the DD ambiguity value of -13.0006 to the optimal set. When the IR module 116 adds the DD ambiguity value to the optimal set, the optimal set at this time includes -13.0006 that corresponds to the first entry and the unique pair of satellites of S3 and S6.

After steps 435 or 440, the procedure continues to step 445. At step 445, the IR module 116 selects the DD ambiguity value from the next entry of the sorted list (e.g., Table 4).

For the example described herein, the IR module 116 selects the DD ambiguity value from the second entry that corresponds to unique pair of satellites S5 and S4 and that has the second smallest variance value (i.e., second smallest absolute value) in the sorted list of 0.0030. As explained above, the first two variance values are the same because the variance values are rounded to four decimal places. However, it should be understood that the variance value of the second entry in Table 4 would be larger if the variance values were not rounded to four decimal places.

Referring back to Fig. 4A, the procedure continues from step 445 to step 450. At step 450, the IR module 116 determines whether (1) the fractional part of the DD ambiguity value from the next entry is less than the threshold value and (2) the DD ambiguity value from the next entry would be independent if added to the optimal set.

For the example described herein, let it be assumed that the DD ambiguity value for $\nabla\Delta n^{(S5)(S4)}$ is -8.0006. Therefore, the fractional part is 0.0006 (e.g., abs(-8.0006 - nint(-8))). As such, the IR module 116 determines that the fractional part (e.g., 0.0006) for the DD ambiguity value of the second entry is less than the threshold value of 0.5.

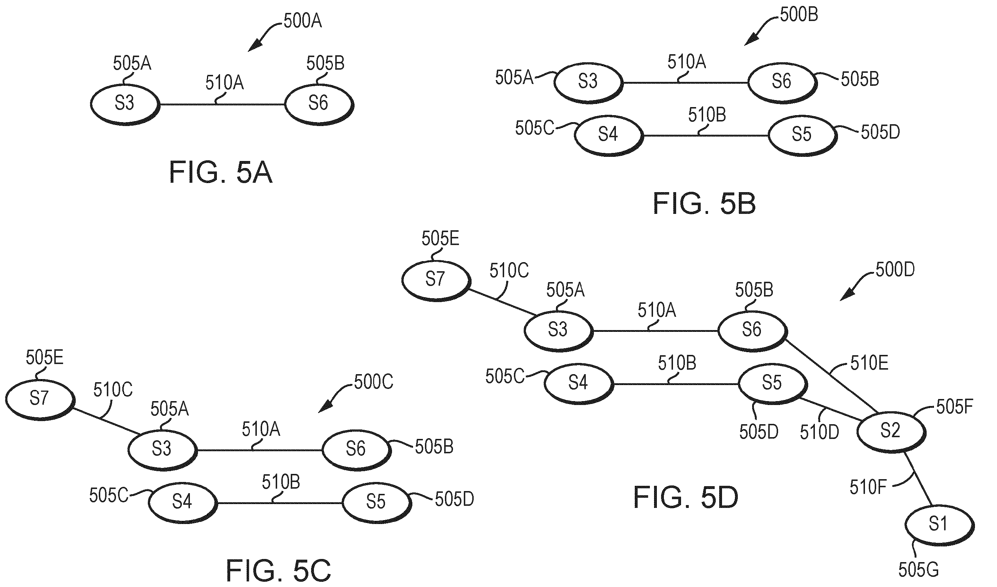

To determine if the DD ambiguity value of the second entry would be independent if added to the optimal set, the IR module 116 may use a breadth first search of a non-oriented graph. Fig. 5A is a non-oriented graph representing an optimal set when a first DD ambiguity value is added to the optimal set according to the one or more embodiments as described herein. The DD ambiguity value of the first entry that is added to the optimal set corresponds to satellites S6 and S3. Therefore, the non-oriented graph 500A of Fig. 5A includes vertex 505A for satellite S3 and vertex 505B for satellite S6. Additionally, the non-oriented graph 500A of Fig. 5A includes a non-oriented connection 510A between vertices 505A and 505B.

The IR module 116 may perform a breadth first search of non-oriented graph 500A to determine if the DD ambiguity value for the second entry would be independent if added to the optimal set. Specifically, the DD ambiguity value for the second entry corresponds to satellites S5 and S4. In non-oriented graph 500A of Fig. 5A, there is no existing path between vertices representing satellites S5 and S4. Therefore, the IR module 116 determines that the optimal set would be independent if the DD ambiguity value from the second entry is added to the optimal set.

Therefore, and in this example, the IR module 116 determines that the DD ambiguity value from the second entry includes a fractional part that is less than the threshold value and that the DD ambiguity value would be independent if added to the optimal set. Therefore, the procedure of Fig. 4A continues from step 450 to step 455.

At step 455, the IR module 116 selects the DD ambiguity value of the next entry for the optimal set or adds the DD ambiguity value of the next entry to the optimal set. Therefore, and in this example, the IR module 116 has selected the DD ambiguity value from the first and second entries for the optimal set or the IR module has added the DD ambiguity values from the first and second entries to the optimal set. When the IR module 116 adds the DD ambiguity values, the optimal set at this point includes the DD ambiguity values of -13.0006 and 8.0006 that correspond to the first two entries.

Fig. 5B is a non-oriented graph representing the optimal set when two DD ambiguity values are added to the optimal set according to the one or more embodiments as described herein. Similar to Fig. 5A, the non-oriented graph 500B of Fig. 5B includes vertices 505A and 505B and non-oriented connection 510A for the DD ambiguity value from the first entry of the sorted list. Non-oriented graph 500B also includes a representation for the DD ambiguity value from the second entry of the sorted list that corresponds to unique pair of satellites S4 and S5. Specifically, the non-oriented graph 500B of Fig. 5B includes vertex 505C for satellite S4 and vertex 505D for satellite S5. Additionally, the non-oriented graph 500B of Fig. 5A includes a non-oriented connection 510B between vertices 505C and 505D.

If the fractional part of the DD ambiguity value from the next entry is equal to or greater than the threshold value or the optimal set would not be independent if the DD ambiguity value is added to the optimal set, the procedure continues from step 450 to step 460. At step 460, the IR module 116 does not select the DD ambiguity value from the next entry for the optimal set or does not add the DD ambiguity value from the next entry to the optimal set.

From step 455 or step 460, the procedure continues to step 465 of Fig. 4B. At step 465, the IR module 116 determines if there is an additional entry in the sorted list (e.g., Table 4).

In the example described herein, there are 19 additional entries after the first two entries. As such, the procedure reverts back from step 465 to step 445 and the IR module 116 selects the DD ambiguity value from the next entry of the sorted list. For the example described herein, let it be assumed that the DD ambiguity value for the third entry for $\nabla\Delta n^{(S7)(S3)}$ is 3.9902, and this DD ambiguity value is selected/added for/to the optimal set based on the execution of steps 450 and 455. Further, let it be assumed that the first three DD ambiguity values are added (i.e., not selected) to the optimal set such that the optimal set is represented as: [-13.0006, -8.0006, 3.9902].

Fig. 5C is a non-oriented graph representing the optimal set when three DD ambiguity values are added to the optimal set according to the one or more embodiments as described herein. Similar to Fig. 5B, the non-oriented graph 500C of Fig. 5C includes representations for the DD ambiguity values from the first and second entries of the sorted list. Non-oriented graph 500C also includes a representation for the DD ambiguity value from the third entry of the sorted list that corresponds to unique pair of satellites S3 and S7. Because non-oriented graph 500B already includes a vertex for satellite S3, a new vertex is not added for satellite S3 corresponding to the DD ambiguity value from the third entry. Instead, vertex 505E only needs to be added in non-oriented graph 500C for satellite S7 corresponding to the DD ambiguity value from the third entry. Additionally, the non-oriented graph 500C of Fig. 5C includes a non-oriented connection 510C between vertices 505A and 505E.

The procedure then again reverts back to step 445 and the IR module 116 selects the DD ambiguity value from the fourth entry of the sorted list that corresponds to satellites S7 and S6. Let it be assumed that the DD ambiguity value for $\nabla \Delta n^{(S7)(S6)}$ is 3.9903. The IR module 116 may determine that the fractional part of the DD ambiguity value of 3.9903 is less than the threshold value of 0.5. However, the IR module 116 determines that the DD ambiguity value from the fourth entry, which corresponds to satellites S7 and S6, would not be independent if added to the optimal set. Specifically, the IR module 116 determines that a path between satellites S7 and S6 exists through satellite S3 in non-oriented graph 500C of Fig. 5C. Therefore, the DD ambiguity value from the fourth entry is not selected for or added to the optimal set by the IR module 116.

As such, and according to the one or more embodiments as described herein, the IR module 116 sequentially evaluates each DD ambiguity value in the list that is sorted based on the variance values. Specifically, the IR module 116 sequentially selects each DD ambiguity value in order from the sorted list and only selects/adds the DD ambiguity value for/to the optimal set if its fractional part is less than the threshold value and if the optimal set would be independent if the DD ambiguity value was added to the optimal set.

Let it be assumed that Table 5 below represents the optimal set for the example as described herein.

Table 5

| First Satellite identifier | Second Satellite identifier | DD ambiguity identifier $\nabla \Delta n^{(i)(j)}$ | DD ambiguity value | Quality of BIE Result |
|---|---|---|---|---|
| S6 | S3 | $\nabla \Delta n^{(S6)(S3)}$ | -13.0006 | ±0.0030 |
| S5 | S4 | $\nabla \Delta n^{(S5)(S4)}$ | -8.0006 | ±0.0030 |
| S7 | S3 | $\nabla \Delta n^{(S7)(S3)}$ | 3.9902 | ±0.0106 |
| S5 | S2 | $\nabla \Delta n^{(S5)(S2)}$ | 1.9582 | ±0.0203 |
| S6 | S2 | $\nabla \Delta n^{(S6)(S2)}$ | 15.0242 | ±0.0282 |
| S2 | S1 | $\nabla \Delta n^{(S2)(S1)}$ | -4.4707 | ±0.0658 |

Each of the DD ambiguity values (e.g., correlated DD ambiguity values) in Table 5 has a fractional part that is less than 0.5 and the optimal set is independent. Specifically, no single ambiguity parameter in the optimal set can be expressed as a linear combination of the other ambiguity parameters in the optimal set. For example, $\nabla \Delta n^{(S6)(S3)}$ cannot be expressed as a linear combination of any of $\nabla \Delta n^{(S5)(S4)}$, $\nabla \Delta n^{(S7)(S3)}$, $\nabla \Delta n^{(S5)(S2)}$, $\nabla \Delta n^{(S6)(S2)}$, and $\nabla \Delta n^{(S2)(S1)}$. Similarly, no other single ambiguity parameter in the optimal set of Table 5 can be expressed as a linear combination of the other remaining ambiguity parameters in the optimal set.

Fig. 5D is a non-oriented graph representing the optimal set that includes the six DD ambiguity values from the example of Table 5 according to the one or more embodiments as described herein. Similar to Fig. 5C, the non-oriented graph 500D of Fig. 5D includes representations for the DD ambiguity values from the first, second, and third entries of the sorted list and that are included in Table 5. Non-oriented graph 500D also includes a representation for the DD ambiguity values from the fourth, fifth, and sixth entries that are included in table 5. Specifically, non-oriented graph 500D includes a representation for the DD ambiguity value for the fourth entry that corresponds to unique pair of satellites S5 and S2.

As depicted in Fig. 5D, vertex 505F is added for satellite S2 and a non-oriented connection 510D is added between vertices 505D and 505F. Further, non-oriented graph 500D includes a representation for the DD ambiguity value for the fifth entry that corresponds to unique pair of satellites S6 and S2. As depicted in Fig. 5D, a non-oriented connection 510E is added between existing vertices 505B and 505F. Finally, non-oriented graph 500D includes a representation for the DD ambiguity value for the sixth entry that corresponds to unique pair of satellites S2 and S1. As depicted in Fig. 5D, vertex 505G is added for satellite S1 and a non-oriented connection 510F is added between vertices 505F and 505G. Therefore, the non-oriented graph 505D of Fig. 5D represents the optimal set of Table 5.

In an embodiment, and when the DD ambiguity values are selected for the optimal set (i.e., not added), the IR module 116 may construct a transformation matrix based on the selected (i.e., identified) entries in the sorted list. The IR module 116 may multiply the transformation matrix with the vector of BIE results in Table 1 or Table 2 to generate a vector (e.g., a 1x6 vector) that corresponds to the values in column 4 of Table 5.

In an embodiment, the IR module 116 may generate the transformation matrix based on the following:

$$C\left[\overline{J}_{ij}, J_{qr}\right] = \begin{cases} 1 \text{ if } q = i \\ -1 \text{ else if } q = j \wedge j \neq r, \text{ where} \\ 0 \text{ else} \end{cases} \quad (11)$$

$\overline{J}_{ij}$ is the index of the ambiguity value from the optimal set for satellite $i$, $j$. For example, $\overline{J}_{ij}$ is a value of 1 through 6 based on the values of i and $j$ from table 5. Further $J_{qr}$ is the index from the BIE results from table 1 or table 2. For example, and for the first ambiguity value in Table 5, $i$ = 3 and $j$ = 6. Further, r = 1. Therefore, $\overline{J}_{ij}$ is $\overline{J}_{(S3)(S6)}$ and $\overline{J}_{(S3)(S6)}$ is equal to a value of 1 since it is the first entry in the vector of DD ambiguity values in Table 5. When q equals $i$, q has a value of 3. Therefore, $J_{qr}$ is $J_{(S3)(S1)}$ As seen in Tables 1 and 2, $J_{(S3)(S1)}$ is the second entry. Therefore, $J_{(S3)(S1)}$ is a value of 2. Accordingly, $C\left[\overline{J}_{ij}, J_{qr}\right]$ is C[1,2] when q is equal to i and C[1,2] = 1. When q equals $j$, q has a value of 6. Therefore, $J_{qr}$ is $J_{(S6)(S1)}$ As seen in Tables 1 and 2, $J_{(S6)(S1)}$ is the fifth entry. Therefore, $J_{(S6)(S1)}$ is a value of 5. Accordingly, $C\left[\overline{J}_{ij}, J_{qr}\right]$ is C[1,5] when q is equal to $j$ and C[1,5] = -1. Therefore, the first row of transformation matrix has values of 0, 1, 0, 0, -1, 0. The IR module 116 may similarly determine the values of the other rows of the transformation matrix in a similar manner.

In the example as described herein, the transformation matrix (C) is:

$$\begin{bmatrix} 0 & 1 & 0 & 0 & -1 & 0 \\ 0 & 0 & 1 & -1 & 0 & 0 \\ 0 & 1 & 0 & 0 & 0 & -1 \\ 1 & 0 & 0 & -1 & 0 & 0 \\ 1 & 0 & 0 & 0 & -1 & 0 \\ 1 & 0 & 0 & 0 & 0 & 0 \end{bmatrix}$$

Therefore, the IR module 116 may multiply the transformation matrix (C) with the vector of BIE results from Table 1 or Table 2 to generate the optimal set. In the example as described herein, the vector of BIE results is:

$$\begin{bmatrix} -4.4707 \\ -32.4956 \\ -14.4296 \\ -6.4289 \\ -19.4949 \\ -36.4858 \end{bmatrix}$$

The IR module 116 may generate the optimal set ($\overline{a}$ based on the following equation:

$$\overline{a} = C\hat{a}, \text{ where} \quad (12)$$

$C$ is the transformation matrix and $\hat{a}$ is the vector of BIE results.

Therefore, the optimal set for the example as described herein is:

$$\begin{bmatrix} -13.0006 \\ -8.0006 \\ 3.9902 \\ 1.9582 \\ 15.0242 \\ -4.4707 \end{bmatrix}$$

The IR module 116 may calculate the variance-covariance matrix for the optimal set based on the following equation:

$$Q_{\bar{a}} = C Q_{\hat{a}} C^T, \text{ where} \qquad (13)$$

$Q_{\bar{a}}$ is the variance-covariance matrix for the optimal set.

Therefore, the optimal set according to the one or more embodiments as described herein is constructed to include the DD ambiguity values that are determined to be the most reliable when resolving the DD ambiguity values to their closest integer. Specifically, and as described in relation to the procedure of Figs. 4A and 4B, the one or more embodiments as described herein use the variance values of each of the DD ambiguity values together with an analysis of the fractional part of each of the DD ambiguity values to identify a set of DD ambiguity values that are most reliable for integer resolution.

As such, the DD ambiguity values of the optimal set that are rounded to their closest integer are rounded to their correct integer value according to the one or more embodiments as described herein. As a result, integer resolved DD ambiguity values are generated. Because the DD ambiguity values of the optimal set are rounded to their correct integer values, a set of consistent ZD ambiguity values can be determined, which is a requirement of server-side PPP-AR. This is an improvement when compared to other existing techniques (e.g., BIE algorithm), where rounding to the nearest integer may result in rounding to the wrong integer value. Therefore, the one or more embodiments as described herein provide an improvement in the existing technological field of integer ambiguity resolution for positioning solutions.

Referring back to Fig. 4B, the procedure continues from step 465 to step 470 after all the entries in the sorted list (e.g., Table 4) have been evaluated. At step 470, the IR module 116 rounds only the DD ambiguity values in the optimal set, with a fractional part that is less than an "rounding threshold", to its closest integer. For the example as described herein, let it be assumed that the rounding threshold is a value of 0.05. Continuing with the Example, the IR module 116 compares the fractional part of each of the DD ambiguity values in the optimal set with the threshold value 0.05. In the example as described herein, only the DD ambiguity value of -4.4707 has a fractional part that is not less than the threshold value of 0.05. As such, the IR module 116 rounds elements 1 through 5 of the optimal set to their nearest integers. The IR module 116 does not round element 6 to its nearest integer.

Therefore, and based on rounding to the closest integer, the optimal set is now:

$$\begin{bmatrix} -13 \\ -8 \\ 4 \\ 2 \\ 15 \\ -4.4707 \end{bmatrix}$$

For the example as described herein, only the first five DD ambiguity values of the optimal set are resolved to their closest integer values.

Referring back to Fig. 4B, the procedure continues from step 470 to step 475. At step 475, the IR module 116 calculates ZD ambiguities using the resolved DD ambiguity values (i.e., DD ambiguity values that are resolved to their closest integer) from the optimal set. In the example as described herein, all but the last DD ambiguity value is resolved to its closest integer. Therefore, the first five DD ambiguity values of the optimal set that are rounded to their nearest integer are used in step 475.

In an embodiment, a DD ambiguity value rounded to its closest and correct integer values, as described herein, can be utilized with the following set of equations to determine the corresponding ZD ambiguities:

$$\begin{aligned} \bar{n}_r^i &= \text{int}\left(n_r^i\right) \\ \bar{n}_r^j &= \text{int}\left(n_r^j\right) \\ \bar{n}_l^i &= \text{int}\left(n_l^j\right) \\ \bar{n}_l^j &= \bar{n}_{rl}^{ij} - \bar{n}_r^i + \bar{n}_r^j + \bar{n}_l^i \end{aligned} \qquad \text{where,} \qquad (14)$$

$\bar{n}_r^i$ is the ZD ambiguity that is arbitrarily set for a first reference station r and a first satellite i, $\text{int}(n_r^i)$ is the closest integer value of the ZD ambiguity floating-point number for the first reference station r and the first satellite *i*, $\bar{n}_r^j$ is the ZD ambiguity that is arbitrarily set for the first reference station r and a second satellite $j$, $\text{int}(n_r^j)$ is the closest integer value of the ZD ambiguity floating-point number for the first reference station r and the second satellite $j$, $\overline{n}_l^i$ is the ZD ambiguity that is arbitrarily set for a second reference station $l$ and the first satellite i, $\text{int}(n_l^j)$ is the closest integer value of the ZD ambiguity floating-point number for the second reference station $l$ and the first satellite i, $\overline{n}_l^j$ is the ZD ambiguity that is calculated for the second reference station $l$ and the second satellite $j$, and $\overline{n}_{rl}^{ij}$ is DD ambiguity value that is resolved to its closest and correct integer value from the optimal set for reference stations r and $l$ and satellites i and $j$ according to the one or more embodiments as described herein.

Therefore, the IR module 116 may calculate $\overline{n}_l^j$ using the resolved DD ambiguity value from the optimal set with the other (e.g., 3) arbitrarily rounded ZD ambiguity values. As such, a consistent set of ZD ambiguities can be determined using the DD ambiguity value that is resolved to its closest and correct integer value according to the one or more embodiments as described herein.

The IR module 116 may determine other ZD ambiguities in a similar manner using the other resolved DD ambiguity values in the optimal set, which, in this example, would be the other four DD ambiguity values that are resolved to their closest integers.

The procedure of Fig. 4B continues from step 475 to step 480. At step 480, the IR module 116 implements a correction algorithm to generate corrections. In an embodiment, the IR module 116 implements the correction algorithm using the consistent set of ZD ambiguities that are determined using the DD ambiguity values that are resolved to their closest and correct integer values according to the one or more embodiments as described herein. In an embodiment, the correction algorithm is PPP-AR.

Based on the implementation of the correction algorithm, the IR module 116 may generate one or more corrections. In an embodiment, the corrections may include, but are not limited to, satellite orbit and clock corrections, ionospheric and tropospheric corrections, phase biases, ambiguity resolution corrections, etc.

The procedure of Fig. 4B continues from step 480 to step 485. At step 485, the generated corrections are transmitted to receiver 104. For example, the correction system, e.g., processing center 201, transmits the corrections generated at step 480 to receiver 104 over network 114.

The procedure continues to step 490 that is optional. At optional step 490, the receiver 104 uses the received corrections to implement a positioning technique. In an embodiment, the positioning technique is PPP-AR that allows receiver 104 to achieve a positional accuracy of 10 cm or better with reduced convergence time when, for example, compared to classic PPP and other conventional techniques that do not resolve DD ambiguities to their correct integer values as described herein. In an embodiment, the receiver 104 may use GNSS data with the received corrections to generate navigation information (e.g., position, velocity, attitude, and/or time) associated with the at least one receiver. The procedure of Figs. 4A and 4B ends at step 495.

It should be understood that a wide variety of adaptations and modifications may be made to the techniques. For example, the steps of the flow diagrams as described herein may be performed sequentially, in parallel, or in one or more varied orders. Further, although reference may be made to generating a sorted list that is sequentially evaluated, it is expressly contemplated that the one or more embodiments as described herein may generate a list of DD ambiguity values based on the variance values that is arbitrarily ordered. The one or more embodiments as described herein may evaluate the list in any manner (e.g., non-sequentially) to determine which DD ambiguity values should be added to the optimal set using the fractional portions and the variance values as described herein. In general, functionality may be implemented in software, hardware or various combinations thereof. Software implementations may include electronic device-executable instructions (e.g., computer-executable instructions) stored in a non-transitory electronic device-readable medium (e.g., a non-transitory computer-readable medium), such as a volatile memory, a persistent storage device, or other tangible medium. Hardware implementations may include logic circuits, application specific integrated circuits, and/or other types of hardware components. Further, combined software/hardware implementations may include both electronic device-executable instructions stored in a non-transitory electronic device-readable medium, as well as one or more hardware components. Above all, it should be understood that the above description is meant to be taken only by way of example.

The subject-matter according to the description above may also be considered to comprise the following aspects according to the invention:

Aspect 1. A system for resolving floating-point ambiguities to correct integer values for use with a positioning technique, the system comprising:

a memory;

a processor coupled to the memory, the processor executing a module configured to:

obtain a plurality of floating-point ambiguities, wherein each of the plurality of floating-point ambiguities is associated with a unique pair of a plurality of different navigation transmitters and a pair of a plurality of different receivers;

determine a variance value for each of the plurality of floating-point ambiguities to compute a plurality of variance values;

use the plurality of variance values to generate a list of the plurality of floating-point ambiguities;

evaluate each of the plurality of floating-point ambiguities in the list;

select, based on the evaluation, a particular floating-point ambiguity for an optimal set when (1) a fractional part of the particular floating-point ambiguity is less than a threshold value and (2) the optimal set is independent if the particular floating-point ambiguity is selected for the optimal set,

wherein the optimal set includes a plurality of selected floating-point ambiguities; and

modify each of the plurality of selected floating-point ambiguities in the optimal set to its closest integer value to generate a plurality of resolved integer ambiguity values.

Aspect 2. The system of aspect 1, wherein the plurality of floating-point ambiguities are double-difference (DD) ambiguity parameter values.

Aspect 3. The system of one or more previous aspects, wherein the DD ambiguity parameter values are generated based on an execution of a Best Integer Equivariant (BIE) algorithm.

Aspect 4. The system of one or more previous aspects, wherein the module is further configured to:

generate a set of zero-difference ambiguity values using the plurality of resolved integer ambiguity values and a plurality of arbitrarily set zero-difference ambiguity values.

Aspect 5. The system of one or more previous aspects, wherein the module is further configured to:

execute a correction algorithm, using the set of zero-difference ambiguity values, to generate one or more navigation corrections.

Aspect 6. The system of one or more previous aspects, wherein the one or more navigation corrections include one or more of a satellite clock error or a phase bias.

Aspect 7. The system of one or more previous aspects, wherein the correction algorithm is Precise Point Positioning with Ambiguity Resolution (PPP-AR).

Aspect 8. The system of one or more previous aspects, wherein a particular fractional part for a specific floating-point ambiguity is calculated as:

$$\text{fractional part} = abs(X\text{-}nint(X)),$$

where

fraction part is the particular fractional part of the specific floating-point ambiguity,

abs is an absolute value operation,

X is the specific floating-point ambiguity, and

nint(X) is a specific closest integer value of the specific floating-point ambiguity. Aspect 9. A method for resolving floating-point ambiguities to correct integer values for use with a positioning technique, the method comprising:

obtaining a plurality of double-difference (DD) ambiguity values, wherein each of the plurality of DD ambiguity values is a floating-point number;

determining a variance value for each of the plurality of DD ambiguity values to compute a plurality of variance values;

using the plurality of variance values to generate a list of the plurality of DD ambiguity values;

evaluating each of the plurality of DD ambiguity values in the list;

selecting, based on the evaluation, a particular DD ambiguity value for an optimal set when (1) a fractional part of the particular DD ambiguity value is less than a threshold value and (2) the optimal set is independent if the particular DD ambiguity value is selected for the optimal set,

wherein the optimal set includes a plurality of selected DD ambiguity value.

modify each of the plurality of selected DD ambiguity value to its closest integer value to generate a plurality of integer resolved DD ambiguity values.

Aspect 10. The method of aspect 9, further comprising:
generating a set of zero-difference ambiguity values using the plurality of integer resolved DD ambiguity values and a plurality of arbitrarily set zero-difference ambiguity values.

Aspect 11. The method of one or more of aspects 9 to 10, further comprising:
executing a correction algorithm, using the set of zero-difference ambiguity values, to generate one or more navigation corrections.

Aspect 12. The method of one or more of aspects 9 to 11, wherein the one or more navigation corrections include one or more of a satellite clock error or a phase bias.

Aspect 13. The method of one or more of aspects 9 to 12, wherein the correction algorithm is Precise Point Positioning with Ambiguity Resolution (PPP-AR).

Aspect 14. The method of one or more of aspects 9 to 13, wherein the plurality of DD ambiguity values are generated based on execution of a Best Integer Equivariant (BIE) algorithm.

Aspect 15. The method of one or more of aspects 9 to 14, wherein a particular fractional part for a specific DD ambiguity value is calculated as:

$$\text{fractional part} = abs(X\text{-}nint(X)),$$

where

fraction part is the particular fractional part of the specific DD ambiguity value,
abs is an absolute value operation,
X is the specific DD ambiguity value, and
nint(X) is a specific closest integer value of the specific DD ambiguity value. Aspect 16. A method for resolving floating-point ambiguities to correct integer values for a positioning solution, the method comprising:

obtaining a plurality of double-difference (DD) ambiguity values;
determining a variance value for each of the plurality of DD ambiguity values to generate a plurality of variance values;
generating a list of the DD ambiguity values using the plurality of variance values; and
selecting a predetermined number of the DD ambiguity values in the list to construct an optimal set of a plurality of selected DD ambiguity values, wherein each of the plurality of selected DD ambiguity values has a fractional part that is less than a threshold value and the optimal set with the plurality of selected DD ambiguity values is independent.

Aspect 17. The method of aspect 16, further comprising:
rounding each of the plurality of selected DD ambiguity values to its closest integer value to generate a plurality of integer resolved DD ambiguity values; generating a set of zero-difference ambiguity values using the plurality of integer resolved DD ambiguity values and a plurality of arbitrarily set zero-difference ambiguity values.

Aspect 18. The method of aspects 16 to 17, further comprising:
executing a correction algorithm, using the set of zero-difference ambiguity values, to generate one or more navigation corrections.

Aspect 19. The method of aspects 16 to 18, wherein the correction algorithm is Precise Point Positioning with Ambiguity Resolution (PPP-AR).

Aspect 20. The method of aspects 16 to 19, wherein the one or more navigation corrections include one or more of a satellite clock error or a phase bias.

**Claims**

1.  A system for resolving floating-point ambiguities to correct integer values for use with a positioning technique, the system comprising:

    a memory;
    a processor coupled to the memory, the processor executing a module configured to:

    obtain a plurality of floating-point ambiguities, wherein each of the plurality of floating-point ambiguities is associated with a unique pair of a plurality of different navigation transmitters and a pair of a plurality of different receivers;

determine a variance value for each of the plurality of floating-point ambiguities to compute a plurality of variance values;

use the plurality of variance values to generate a list of the plurality of floating-point ambiguities;

evaluate each of the plurality of floating-point ambiguities in the list;

select, based on the evaluation, a particular floating-point ambiguity for an optimal set when (1) a fractional part of the particular floating-point ambiguity is less than a threshold value and (2) the optimal set is independent if the particular floating-point ambiguity is selected for the optimal set,

wherein the optimal set includes a plurality of selected floating-point ambiguities; and

modify each of the plurality of selected floating-point ambiguities in the optimal set to its closest integer value to generate a plurality of resolved integer ambiguity values.

2. The system of claim 1, wherein the plurality of floating-point ambiguities are double-difference (DD) ambiguity parameter values.

3. The system of claim 2, wherein the DD ambiguity parameter values are generated based on an execution of a Best Integer Equivariant (BIE) algorithm.

4. The system according to any of the preceding claims, wherein the module is further configured to:
generate a set of zero-difference ambiguity values using the plurality of resolved integer ambiguity values and a plurality of arbitrarily set zero-difference ambiguity values.

5. The system of claim 4, wherein the module is further configured to:
execute a correction algorithm, using the set of zero-difference ambiguity values, to generate one or more navigation corrections, in particular wherein the one or more navigation corrections include one or more of a satellite clock error or a phase bias and/or wherein the correction algorithm is Precise Point Positioning with Ambiguity Resolution (PPP-AR).

6. The system according to any of the preceding claims, wherein a particular fractional part for a specific floating-point ambiguity is calculated as:

$$\text{fractional part} = \text{abs}(X\text{-nint}(X)),$$

where

fraction part is the particular fractional part of the specific floating-point ambiguity,
abs is an absolute value operation,
X is the specific floating-point ambiguity, and
nint(X) is a specific closest integer value of the specific floating-point ambiguity.

7. A method for resolving floating-point ambiguities to correct integer values for use with a positioning technique, the method comprising:

obtaining a plurality of double-difference (DD) ambiguity values, wherein each of the plurality of DD ambiguity values is a floating-point number;

determining a variance value for each of the plurality of DD ambiguity values to compute a plurality of variance values;

using the plurality of variance values to generate a list of the plurality of DD ambiguity values;

evaluating each of the plurality of DD ambiguity values in the list;

selecting, based on the evaluation, a particular DD ambiguity value for an optimal set when (1) a fractional part of the particular DD ambiguity value is less than a threshold value and (2) the optimal set is independent if the particular DD ambiguity value is selected for the optimal set,

wherein the optimal set includes a plurality of selected DD ambiguity value.

modify each of the plurality of selected DD ambiguity value to its closest integer value to generate a plurality of integer resolved DD ambiguity values.

8. The method of claim 7, further comprising:

generating a set of zero-difference ambiguity values using the plurality of integer resolved DD ambiguity values and a plurality of arbitrarily set zero-difference ambiguity values.

9. The method of claim 8, further comprising:
executing a correction algorithm, using the set of zero-difference ambiguity values, to generate one or more navigation corrections, in particular wherein the one or more navigation corrections include one or more of a satellite clock error or a phase bias and/or wherein the correction algorithm is Precise Point Positioning with Ambiguity Resolution (PPP-AR).

10. The method according to any of the claims 7 to 9, wherein the plurality of DD ambiguity values are generated based on execution of a Best Integer Equivariant (BIE) algorithm.

11. The method according to any of the claims 7 to 10, wherein a particular fractional part for a specific DD ambiguity value is calculated as:

$$\text{fractional part} = abs(X\text{-}nint(X)),$$

where

fraction part is the particular fractional part of the specific DD ambiguity value,
abs is an absolute value operation,
X is the specific DD ambiguity value, and
nint(X) is a specific closest integer value of the specific DD ambiguity value.

12. A method for resolving floating-point ambiguities to correct integer values for a positioning solution, the method comprising:

obtaining a plurality of double-difference (DD) ambiguity values;
determining a variance value for each of the plurality of DD ambiguity values to generate a plurality of variance values;
generating a list of the DD ambiguity values using the plurality of variance values; and
selecting a predetermined number of the DD ambiguity values in the list to construct an optimal set of a plurality of selected DD ambiguity values, wherein each of the plurality of selected DD ambiguity values has a fractional part that is less than a threshold value and the optimal set with the plurality of selected DD ambiguity values is independent.

13. The method of claim 12, further comprising:

modifying each of the plurality of selected DD ambiguity values to its closest integer value to generate a plurality of integer resolved DD ambiguity values;
generating a set of zero-difference ambiguity values using the plurality of integer resolved DD ambiguity values and a plurality of arbitrarily set zero-difference ambiguity values.

14. The method of claim 13, further comprising:
executing a correction algorithm, using the set of zero-difference ambiguity values, to generate one or more navigation corrections, in particular wherein the correction algorithm is Precise Point Positioning with Ambiguity Resolution (PPP-AR).

15. The method according to claim 14, wherein the one or more navigation corrections include one or more of a satellite clock error or a phase bias.

FIG. 1

EP 4 682 589 A1

FIG. 2

```
        ( START )──305
             │
             ▼
┌─────────────────────────────────────────────┐
│   OBTAIN DECORRELATED DD AMBIGUITY VALUES     │──310
└─────────────────────────────────────────────┘
             │
             ▼
┌─────────────────────────────────────────────┐
│   DETERMINE DIAGONAL VARIANCE-COVARIANCE      │
│ MATRIX OF DECORRELATED DD AMBIGUITY VALUES    │──315
└─────────────────────────────────────────────┘
             │
             ▼
┌─────────────────────────────────────────────┐
│   CALCULATE VARIANCE-COVARIANCE MATRIX OF     │
│          CORRELATED AMBIGUITIES               │──320
└─────────────────────────────────────────────┘
             │
             ▼
┌─────────────────────────────────────────────┐
│  USE MAIN DIAGONAL OF VARIANCE-COVARIANCE     │
│ MATRIX OF CORRELATED AMBIGUITIES TO IDENTIFY  │──325
│    QUALITY FOR EACH DD AMBIGUITY VALUE        │
└─────────────────────────────────────────────┘
             │
             ▼
         ( END )──330
```

# FIG. 3

START ~405

CALCULATE DD AMBIGUITY VALUES FOR ALL UNIQUE PAIRS OF SATELLITES ~410

CALCULATE VARIANCE VALUE FOR EACH DD AMBIGUITY VALUE CORRESPONDING TO A DIFFERENT UNIQUE PAIR OF SATELLITES ~415

SORT DD AMBIGUITY VALUES BASED ON VARIANCE VALUES ~420

SELECT DD AMBIGUITY VALUE FROM FIRST ENTRY OF SORTED LIST ~425

430
YES / IS FRACTIONAL PART OF DD AMBIGUITY VALUE FROM FIRST ENTRY LESS THAN THRESHOLD? \ NO

435
SELECT/ADD DD AMBIGUITY VALUE FOR/TO OPTIMAL SET

440
DO NOT SELECT/ADD DD AMBIGUITY VALUE FOR/TO OPTIMAL SET

SELECT DD AMBIGUITY VALUE FROM NEXT ENTRY OF SORTED LIST ~445

450
YES / IS FRACTIONAL PART OF DD AMBIGUITY VALUE LESS THAN THRESHOLD VALUE AND WOULD DD AMBIGUITY VALUE FROM NEXT ENTRY BE INDEPENDENT IF ADDED TO OPTIMAL LIST? \ NO

455
SELECT/ADD DD AMBIGUITY VALUE FOR/TO OPTIMAL SET

460
DO NOT SELECT/ADD DD AMBIGUITY VALUE FOR/TO OPTIMAL SET

B

A

FIG. 4A

B   A

IS THERE ANY ADDITIONAL ENTRY IN SORTED LIST? — 465

YES

NO

ROUND ONLY THE DD AMBIGUITY VALUES IN OPTIMAL SET, WITH A FRACTIONAL PART THAT IS LESS THAN ROUNDING THRESHOLD, TO CLOSEST INTEGER VALUE — 470

CALCULATE ZD AMBIGUITIES USING RESOLVED DD AMBIGUITY VALUES FROM OPTIMAL SET — 475

IMPLEMENT CORRECTION ALGORITHM TO GENERATE CORRECTIONS — 480

TRANSMIT CORRECTIONS TO RECEIVER — 485

RECEIVER OPTIONALLY USES RECEIVED CORRECTIONS TO IMPLEMENT POSITIONING TECHNIQUE — 490

END — 495

FIG. 4B

FIG. 5A

FIG. 5B

FIG. 5C

FIG. 5D

Europäisches
Patentamt

European
Patent Office

Office européen
des brevets

## EUROPEAN SEARCH REPORT

**Application Number**

EP 25 18 9055

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/176271 A1 (DAI LIWEN L [US] ET AL) 12 July 2012 (2012-07-12) * par. 65, 128-163 * | 1-15 | INV. G01S19/44 |
| A | US 2012/162007 A1 (LEANDRO RODRIGO [DE] ET AL) 28 June 2012 (2012-06-28) * the whole document * | 1-15 | |
| A | EP 2 759 849 A1 (UNIV MUENCHEN TECH [DE]) 30 July 2014 (2014-07-30) * the whole document * | 1-15 | |

**TECHNICAL FIELDS SEARCHED (IPC)**

G01S

The present search report has been drawn up for all claims

| Place of search | Date of completion of the search | Examiner |
|---|---|---|
| Munich | 9 December 2025 | González Moreno, J |

EPO FORM 1503 03.82 (P04C01)

## ANNEX TO THE EUROPEAN SEARCH REPORT
## ON EUROPEAN PATENT APPLICATION NO.

EP 25 18 9055

This annex lists the patent family members relating to the patent documents cited in  the above-mentioned European search report.
The members are as contained in the European Patent Office EDP file on
The European Patent Office is in no way liable for these particulars which are merely given for the purpose of information.

09-12-2025

| Patent document cited in search report | Publication date | Patent family member(s) | Publication date |
|---|---|---|---|
| US 2012176271 A1 | 12-07-2012 | AU 2011354612 A1 | 25-07-2013 |
| | | BR 112013017730 A2 | 18-02-2020 |
| | | CN 103348261 A | 09-10-2013 |
| | | EP 2663878 A1 | 20-11-2013 |
| | | RU 2013137442 A | 20-02-2015 |
| | | US 2012176271 A1 | 12-07-2012 |
| | | WO 2012096773 A1 | 19-07-2012 |
| US 2012162007 A1 | 28-06-2012 | CN 102498414 A | 13-06-2012 |
| | | CN 102498415 A | 13-06-2012 |
| | | CN 102576077 A | 11-07-2012 |
| | | CN 102576080 A | 11-07-2012 |
| | | CN 102576081 A | 11-07-2012 |
| | | DE 112010003672 T5 | 13-12-2012 |
| | | DE 112010003679 T5 | 13-12-2012 |
| | | DE 112010003681 T5 | 10-01-2013 |
| | | DE 112010003691 T5 | 17-01-2013 |
| | | DE 112010003699 T5 | 07-02-2013 |
| | | US 2012154210 A1 | 21-06-2012 |
| | | US 2012154214 A1 | 21-06-2012 |
| | | US 2012154215 A1 | 21-06-2012 |
| | | US 2012162007 A1 | 28-06-2012 |
| | | US 2012163419 A1 | 28-06-2012 |
| | | WO 2011034614 A2 | 24-03-2011 |
| | | WO 2011034615 A2 | 24-03-2011 |
| | | WO 2011034616 A2 | 24-03-2011 |
| | | WO 2011034617 A2 | 24-03-2011 |
| | | WO 2011034624 A2 | 24-03-2011 |
| EP 2759849 A1 | 30-07-2014 | NONE | |

EPO FORM P0459

For more details about this annex : see Official Journal of the European Patent Office, No. 12/82